# EUROPEAN PATENT APPLICATION

(11) **EP 2 204 970 A1**
(43) Date of publication of application: **07.07.2010**
(21) Application number: 09015512.8
(22) Date of filing: 15.12.2009
(51) Int. Cl.: H04L 29/14

(54) **Wireless network with star topology**

(30) Priority: 31.12.2008 US 347166
(71) Applicant: Mitsubishi Electric Corporation, Tokyo 100-8310 (JP)
(72) Inventor: Duan, Chunjie, Medfield, MA 02052 (US); Zhang, Jinyun, Cambridge, MA 02141 (US); Orlik, Philip, Cambridge, MA 02140 (US)
(74) Representative: Pfenning, Meinig & Partner GbR

(57) **Abstract**

A wireless network with a star topology includes a first central node (101), a second central node (201), wherein the first and second nodes are functionally equivalent. A set of leaf nodes (102) are configured to communicate with either the first central node or the second central node via wireless links (120,220), depending whether the central nodes are active or inactive.

## Description

### Field of the Invention

This invention relates to wireless communication networks, and more particularly, to wireless communication networks with high reliability and system availability.

### Background of the Invention

A conventional star network includes a central node, (e.g., access point, base station, switch, or hub), and multiple leaf nodes. The leaf nodes communicate only directly with the central node. Therefore, the network forms a graph with a topology of a star.

Many wireless networks employ the star topology. For example, in an IEEE 802.11 standard wireless local area network, each access point forms a star network with nodes connected to the access point. Such networks can use orthogonal frequency division multiple access (OFDMA), and time division multiple access (TDMA) symbols. The mobile stations communicate with the access point directly, but not with each other.

Similarly, in a cellular network, each base station communicates with mobile terminals in a cell. Each cell can be considered a star network.

The following are advantages of a star network. Passing of packets through unnecessary nodes is eliminated by this topology. At most three nodes and two links (channels) are involved in any communication between any two nodes within the network. Therefore, performance is predictable and enhanced.

Each leaf nodes is inherently isolated by the link that connects the node to the hub. This makes the isolation of the individual nodes straightforward, and amounts to disconnecting the node from the central hub. This isolated nature also prevents any non-centralized failure to affect the network. The isolation and centralization simplifies fault detection, as each link or node can be probed individually.

The central node has total control of both access and resources. The central node coordinates the operations of all the leaf nodes in the network, and therefore can reduce or eliminate any collision and conflict between leaf nodes.

The capacity of the network can be expanded by only increasing capacity of the central node.

The centralized nature also allows the monitoring of traffic through the network to determine unusual behavior.

The simple star topology obviates the need for complex routing or message passing protocols.

One disadvantage of a start topology is the dependence on the central node. The central node becomes the performance bottleneck and can also be a cause of a single point of failure. The failure of the central node renders the entire network inoperable and therefore greatly reduces the network availability performance. In addition, the performance and scalability of the network depend on the capabilities of the central node.

Another disadvantage of the star topology is that each leaf node is connected to the network only by the link to the central node. If the individual link between a leaf node and central node becomes unreliable, the leaf node cannot communicate properly with other nodes in the network. The failure of an individual link between the center node and leaf nodes results in the isolation of the leaf node.

Therefore, the limitations imposed by the conventional star topology makes it difficult to design a wired or wireless network using the star topology that can achieve very high service availability and performance reliability as demanded by many applications.

In communication networks, automatic retransmission request (ARQ) is often employed to improve communication reliability. In ARQ, if a receiving node did not receive a message correctly, the node can request the transmitting nodes to retransmit the message.

In wireless (or wired) communication networks, spatial diversity also provides improved reliability. Networks can be designed so that data packets are transmitted from a transmitting node to a receiving node via two or more uncorrelated links.

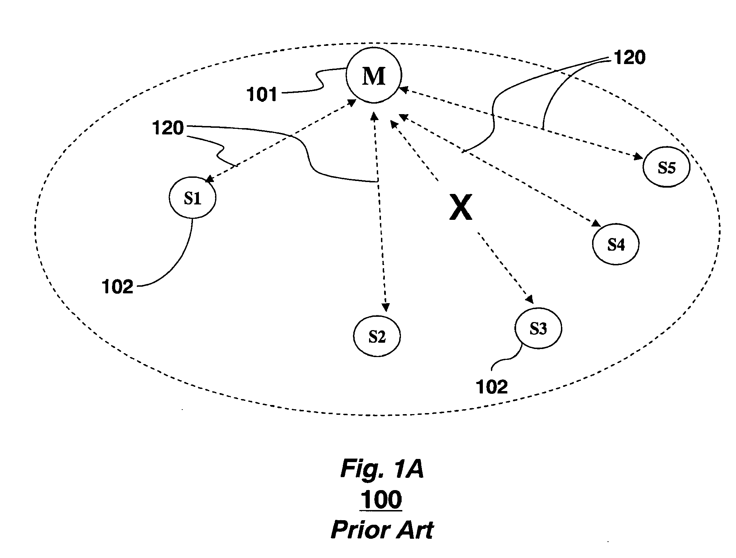

Figure 1A shows a conventional wireless star network 100. The network includes a central node M 101, and leaf nodes Sn 102, where n ∈ {1, 2, ..., N}, where N is a maximal number of leaf nodes in the network, e.g.,. The central and each leaf node are directly connected by a wireless link 120. The leaf nodes do not communicate directly with each other. Communications between leaf nodes is via the central node. For instance, S1-M-S5 is the path for data transmitted from S1 to S5.

In the case the link between the central node 101 and a particular leaf node, for instance S3, is non-functional or unreliable (X), the leaf nodes is isolated from the network. Other leaf nodes can still operate normally. In the case the central node is disabled, then the entire network 100 is nonfunctional.

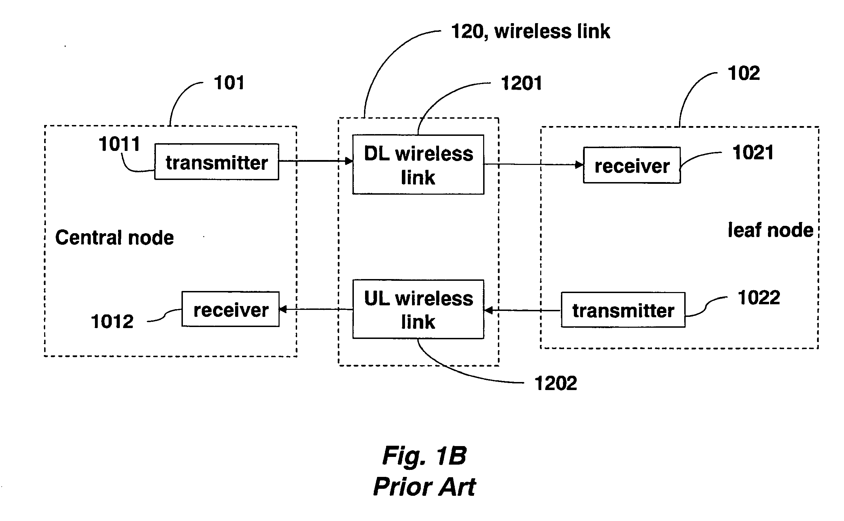

Figure 1B shows the component of a bi-directional wireless link. The link includes an uplink (UL) 1202 and a downlink (DL) 1201. The downlink delivers data from the central node to the leaf node. The uplink delivers data from the leaf node to the central node. The downlink includes of the transmitter of the central node 1011, the wireless link 1201 and the receiver of the leaf node 1021. The uplink includes the receiver of the central node 1012, the wireless link 1202 and the transmitter of the leaf node 1022. The uplink and downlink wireless link can be the same or not.

A path can be denoted by the nodes involved in communicating data. For example, {S1, M, S3} indicates that the data is delivered from S1 to M, and then from M to S3.

The downlink fails if the transmitter 1011, or the receiver 1021 fails, or the link is unavailable or unreliable. The result of the downlink failure results in the leaf node failing to receive the downlink data completely or with errors. Similarly, the uplink fails if the transmitter of the leaf node 1022, the receiver of the central node 1012 fail, or the link 1202 becomes unavailable or unreliable. Then, the central node cannot correctly receive the data transmitted by the leaf node.

**MAC superframe structure**

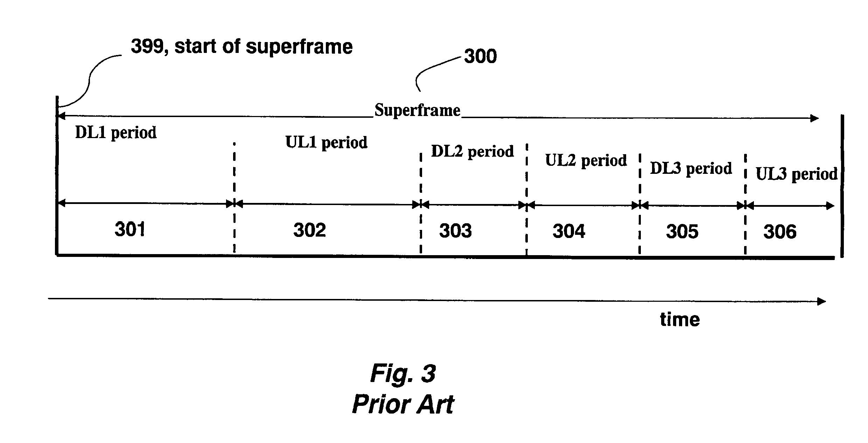

Figure 3 shows a MAC superframe structure 300 of the prior art star network. The superframe 300 includes six time periods. In a first downlink period DL1 301, the central node transmits and all leaf nodes receive. In a first uplink period UL1 302, all leaf nodes transmit (sequentially or in parallel), and the central node receives. The transmitted uplink data include an acknowledgement of the DL1 data as well as the actual uplink data.

The period DL2 303 allows the central node to acknowledge the reception of the UL1 data from the leaf nodes and to retransmit all or fraction of the DL1 data when certain leaf nodes fail to response or transmit a negative acknowledgement (NACK). This period also include a request to leaf nodes to retransmit uplink data in period UL2 304, if necessary. Period DL3 305 allows the central node to retransmit one more time, and period UL3 306 is for the second retransmission of leaf nodes, in case the first retransmission fails. The MAC frame structure that employs ARQ can significantly improve the success rate of both the downlink and uplink transmission.

### Summary of the Invention

The invention describes a highly reliable wireless network structure and operation with star topology. The invented network topology includes one (or more) standby center node, in addition to the existing active central node and leaf nodes. The invented star network provides very high reliability and availability. The invention describes the network topology and the media access control (MAC) frame structure. The invention also describes protocols for the active and standby nodes to switch their operation modes.

### Brief Description of the Drawings

Figure 1A is a schematic of a prior art star network with a single central node and multiple leaf nodes;

Figure 1B is a block diagram of a wireless link between a central node and a leaf node.

Figure 2 is a schematic of a star network according to embodiments of the invention, with an active central node, a stand-by central node and leaf nodes.

Figure 3 is a block diagram of a MAC superframe structure for the conventional star network of Figure 1A.

Figure 4 is a block diagram of a MAC superframe structure for the star network according to embodiments of the invention;

Figure 5 is a timing diagram of an operation of the star network according to embodiments of the invention;

Figure 6 is a flow diagram of a transmission and retransmission process according to embodiments of the invention;.

Figure 7 is timing diagram of standby node assisted downlink retransmission according to embodiments of the invention;

Figure 8 is a timing diagram of standby node assisted uplink retransmission according to embodiments of the invention;

Figure 9 is a timing diagram of an active node assisted uplink retransmission to the standby node according to embodiments of the invention.

Figure 10 is a timing diagram of when a central node mode switch is triggered by a request from the active node according to embodiments of the invention; and

Figure 11 is a timing diagram of when a central node mode switch is triggered by a request from the standby central node according to embodiments of the invention.

### Detailed Description of the Preferred Embodiments

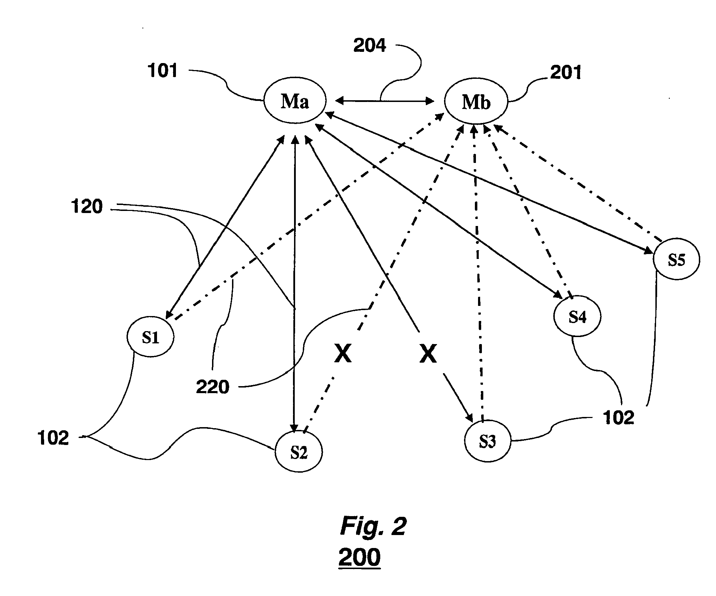

Figure 2 shows a star network 200 according to embodiments of the invention. The network includes an active central node Ma 101, standby central node Mb 201, and leaf nodes Sn 102. The central nodes Ma and Mb are functionally equal, other than their operating modes. Each leaf node 102 connects to the network by two wireless links 120 and 220. The links form channels with predetermined subcarrier frequencies. The leaf nodes in the network only transmit when polled, and a new node joining the network first monitors the channels.

The reliability and availability of the star network can be improved by providing redundancy. Redundancy can be applied to nodes and links. The redundant standby node can prevent failure of an individual node from disrupting the operation of the network. Redundant links allow data to be delivered to the destination via different links if the original links become unavailable or have poor reliability.

To provide uninterrupted service, the standby operates in a "hot" standby mode during normal operation. In the hot-standby mode, the standby node remains synchronized to the corresponding active nodes, but otherwise has limited participation in the network. Being synchronized, the two central nodes duplicate all necessary information to operate the network, and to immediately switch operation from one node to the other.

In the event of a failure of an active node, the standby node switches from standby mode to active mode, and resumes the operation of the failed active nodes and provides services with little or no interruption. The switch over can occur within one scan cycle, i.e., the period between beacons, e.g., Tscan < 150 or 300 ms.

Two central nodes 101, 201 are connected to each other by another wireless link 204, which can be wireless or wired when the two central nodes are co-located. This link is referred to as parallel link (PL) herein. Similar to the network 100, the leaf nodes only communicate with the central nodes. The leaf nodes only communicate with each other via the central nodes.

The active central node Ma 101 performs necessary functions, such as forming and managing the network, communicating with the leaf nodes. In addition, then node Ma communicates with the standby central node Mb 201, and monitors its status.

The standby central node Mb does not perform all the same functions as the active central node Ma. The standby central node Mb synchronizes to the state of the active central node Ma. Therefore, the standby central node 101 monitors the transmission by the active central node, and all leaf nodes. In addition, the standby central node periodically transmits its state to the active central node to enable the active central node and the leaf nodes to verify the state of the wireless links between the standby central node and others nodes.

The standby central node can also be available to assist data delivery between the active central node and the leaf nodes during normal operation. In this configuration, the standby node Mb provides an alternative link between the active node and the leaf nodes. When nodes Ma and Mb are co-located, the alternative link also provides spatial diversity in case of fading between Ma and the leaf nodes Sn. In this case, the node Mb can relay messages to Sn. With the standby central node, a leaf node can remain connected to the network even when the direct link between the leaf node and the active node becomes unavailable or unreliable.

For example, if the uplink wireless link between the active central node 101 and a leaf node Sn is unavailable or unreliable, the path {Sn, Ma} become unavailable, then the leaf node Sn can still communicate with node Ma via the standby node Mb 201 through paths {Sn, Mb, Ma} and {Ma, Mb, Sn}. Similarly, {Ma, Mb, Sn} is an alternative path to path {Ma, Sn}. It is also possible to use {Ma, Sn, Mb} as an alternative path for {Ma, Mb}. Here Sn can be any of the leaf nodes.

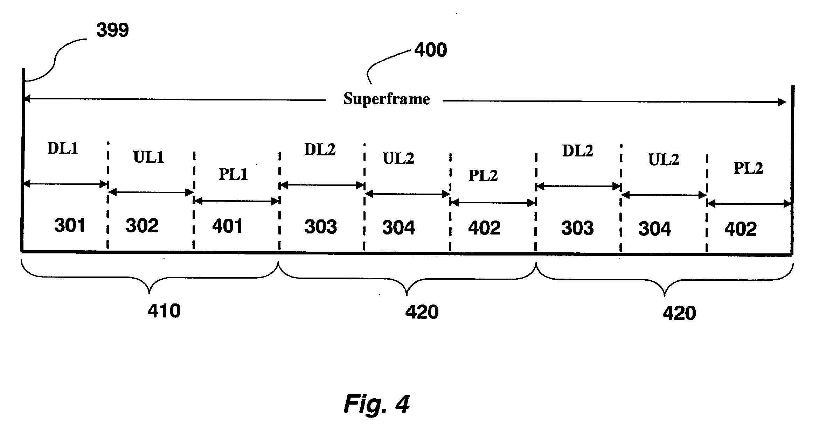

Figure 4 shows a MAC superframe 400 for the star network 200 with standby central node as shown in Figure 2. The superframe includes one initial transmission segment 410, and one or multiple optional retransmission segments 420.

The initial and retransmission segments can each be partitioned into three periods: downlink transmission periods DL1 or DL2; uplink transmission period UL1 or UL2, and parallel link transmission period PL1 or PL2. The initial transmission segment 410 includes of one downlink period DL1 301, one uplink period UL1 302 and one parallel link period PL1 401.

Each retransmission period 420 includes the downlink period DL2 303, the uplink period UL2 304, and the parallel link period PL2 402.

The example in Figure 4 shows one initial transmission segment and two retransmissions. The number of retransmission can be adapted to performance and other requirements. A duration of the superframe can be fixed or variable.

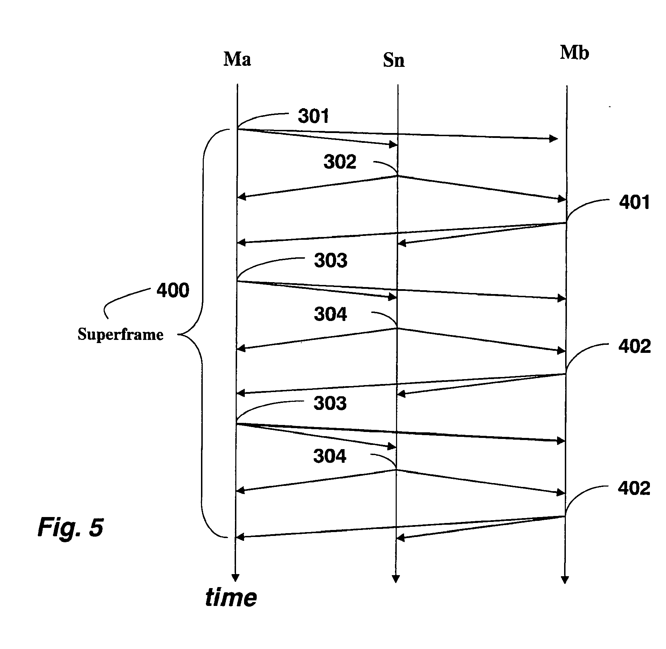

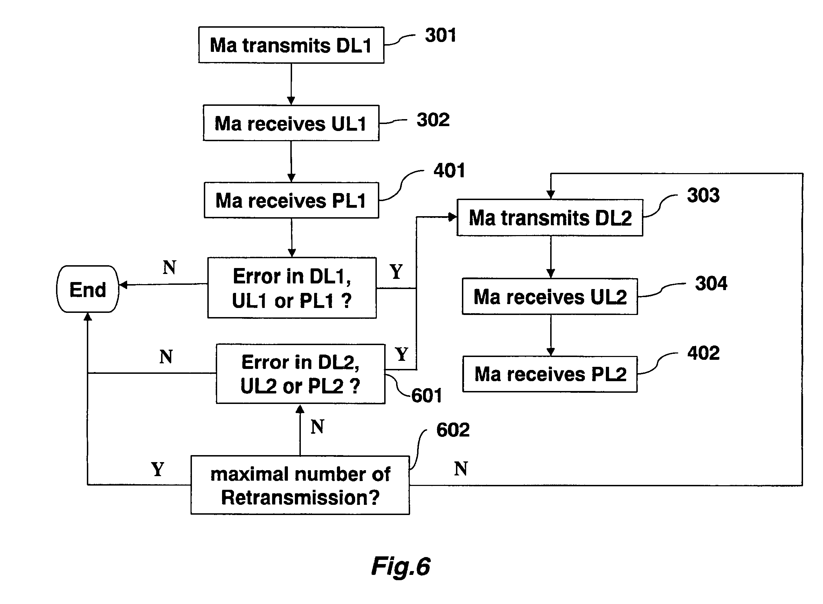

Figures 5 and 6 shows details of the timing, in a downward direction, for communicating the data in the network within the superframe 400. During the downlink period DL1, DL2, the active central node transmits and the standby central node and leaf nodes receive. During the parallel-link period PL 1, PL2, the standby central node transmits and the active central node and leaf nodes receive. During the uplink period UL1, UL2, the leaf nodes transmit (sequentially or in parallel), and the active central node Ma and standby node Mb 201 receive.

In the superframe, the active central node Ma transmits downlink data to leaf nodes Sn, as well as other broadcast messages such as network management and resource allocation in DL 1. A beacon can be part of transmission during DL1 period. The beacon is used to synchronize operations, and to determine the structure of the various periods.

A leaf node can transmit (sequentially or in parallel) in the first uplink period UL1 302, only after the node receives data from the node Ma during the DL1 period. The data transmitted during the period UL1 include but is not limited to: an acknowledgement of the DL1 packet, uplink data to node Ma, and an acknowledgment of the PL packet from a previous superframe.

During the parallel link period PL1 401, the standby node Mb transmits data to the active node Ma. The receiver of the active node determines whether the downlink link is functioning, and the performance is acceptable. The data transmitted in this period include: ACK of the reception of DL1 data, ACK of the reception of UL1 data from leaf nodes. The data can also include mission of all or portion of the DL1 data that are not received correctly by leaf nodes, and other data from node Mb to node Ma. It can also include retransmission of received data from some or all leaf nodes in UL1 period. Steps 601 and 602 respectively check for errors and a maximal number of retransmissions.

In one embodiment, the node Ma can combine the data from a leaf node Sn indirectly relayed by node Mb with data directly received from the same leaf node to improve the error rate. No retransmission is needed if all DL1, UL1 and PL1 transmissions are received successfully by the intended recipients.

The following are some conditions that can require retransmission. Some or all leaf nodes fail to receive DL1 data correctly. The condition is indicated in UL1 packet by the leaf nodes or by the absence of UL1 transmission by leaf nodes. The node Ma receives UL1 data with error, or the node Mb receives either DL1 data, or UL1 data with error. The condition is indicated in PL1 packet. The node Ma receives PL1 packet with error.

In a retransmission segment, the active central node Ma 101 transmits in the downlink period DL2, leaf nodes only transmit in the UL2 period when requested by the active central node Ma or the standby central node Mb 102, and the standby central node transmits in PL2 period.

To achieve high performance, the standby node can be configured to assist the retransmissions.

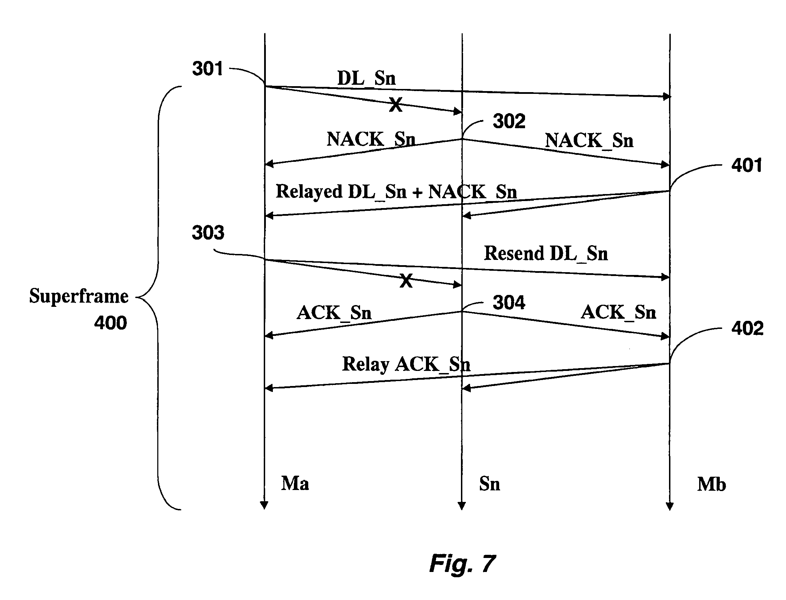

Figure 7 shows one implementation of standby node assisted downlink retransmission. If certain leaf nodes do not receive data DL_Sn in DL1 period, or receive the DL_Sn with errors, the leaf nodes indicate such conditions by either sending NACK in the UL1 packets, or do not transmit UL1 packets.

The standby central node Mb 201 immediately retransmits DL_Sn data in the PL1 packet. The active central node Ma 101 also retransmits these data in DL2 slot.

Figure 7 shows that DL_Sn data relayed by Mb is received successfully by the leaf nodes Sn, even though the retransmitted DL_Sn in DL2 fails again. Leaf node Sn can also combine the received signal from node Mb in PL1, and received signal from Ma in DL2 to further improve the success rate.

Such a transmission scheme improves the downlink transmission reliability by both retransmission and path spatial diversity.

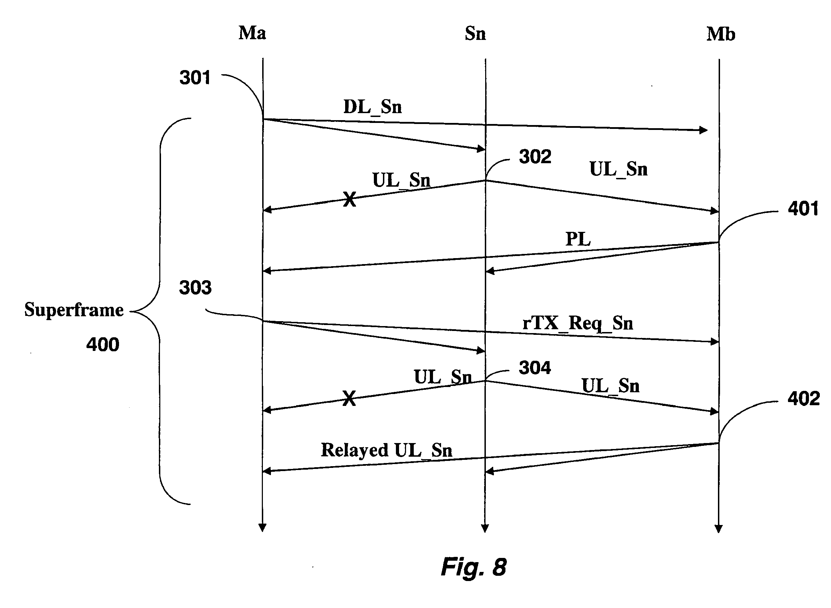

Figure 8 shows the timing of standby node assisted retransmission of uplink data. If data in UL1 from some leaf nodes UL_Sn are received with error by node Ma but correctly by node Mb (for example, indicated by ACK in PL1), node Ma can transmit a request in DL2 for uplink data retransmission. The corresponding leaf nodes retransmit the data UL_Sn in UL2. The standby node Mb also transmits the same data UL_Sn in PL2.

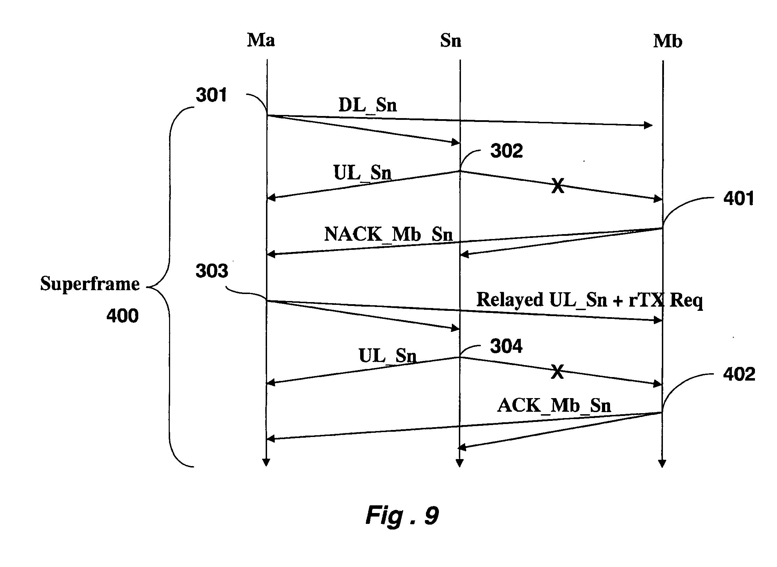

Figure 9 shows the timing of active node assisted retransmission of uplink data to the standby node. If uplink data from some leaf nodes UL_Sn are received correctly by node Ma, but incorrectly by nodeMb (indicated by NACK in PL1), node Ma retransmits UL_Sn in DL2 period and also request the corresponding leaf nodes Sn to retransmit UL_Sn in UL2 period.

Generally, the parallel link 204 is more reliable. It is also possible to configure the network such that if data in DL 1 is not received correctly by node Mb, node Ma can request one or more leaf nodes to relay the DL message to Mb. Similarly, PL data not received correctly by Ma can be relayed to Ma by leaf nodes.

**Central nodes operation mode switch**

For improved reliability and availability, the central nodes can switch between different operation modes: inactive, standby and active.

The active central node Ma 101 can switch to either standby mode, or inactive mode, when it stops operating, and becomes isolated from the network.

The active central node can switch to standby mode when it:
a. receives a command from the network, or other external input such as a command from an operator of the network, and
b. determines that the standby nodes has better performance, such as better link quality with leaf nodes, i.e., an overall error rate of the standby central node is much lower than that of the active node.

The active central node becomes inactive and removes itself from the network if:
a. the active central node receives request by the operator or an external command,
b. DL data cannot be received by some or all leaf nodes,
c. the central node cannot receive data correctly from some or all leaf nodes, or
d. the standby central node becomes an active central node by declaring this intent in PL data communicated to the active node.

The standby central node becomes inactive if:
a. the standby node receives a command from the active standby master to switch to inactive mode,
b. the standby node fails to receive any data in the DL, or the UL period, or
c. the PL data transmitted by the standby node are not received (and acknowledged) by the active central node and all leaf nodes.

The standby central node becomes an active central node only if:
a. the standby node receives a request from the current active central node, or
b. the standby node detects a failure in the active central node.

The active central node has failed when it stops transmitting, or receiving correctly. The failure can be caused by hardware failure, software failure, or physical damage or blockage to the antennas. If these conditions cannot be detected by the active node, the standby central node can detect these conditions and declare itself to be the active node.

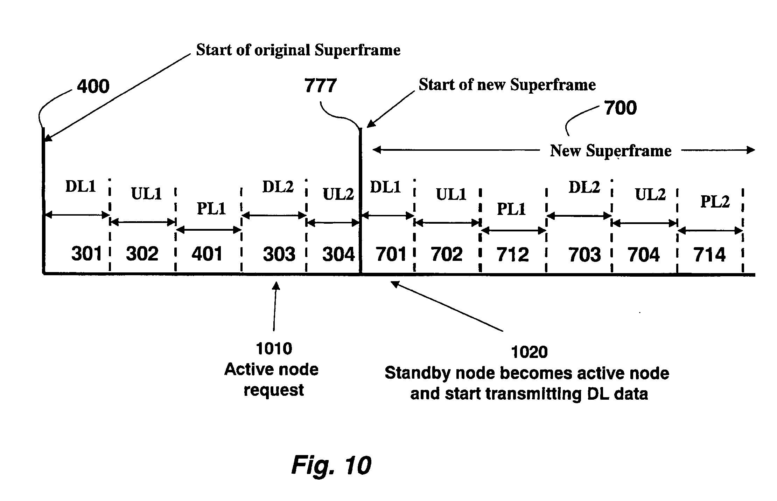

Figure 10 shows the timing of an implementation of a switch over process triggered by the active central node request 1010 in DL2. The active central node detects its failure during an initial transmission segment. The standby central node declares that it becomes active by transmitted DL1 data in the PL2 period. Therefore, the superframe starts at the beginning of the original PL2 period 777. All leaf nodes start transmitting 1020 in the assigned period in the new superframe 700.

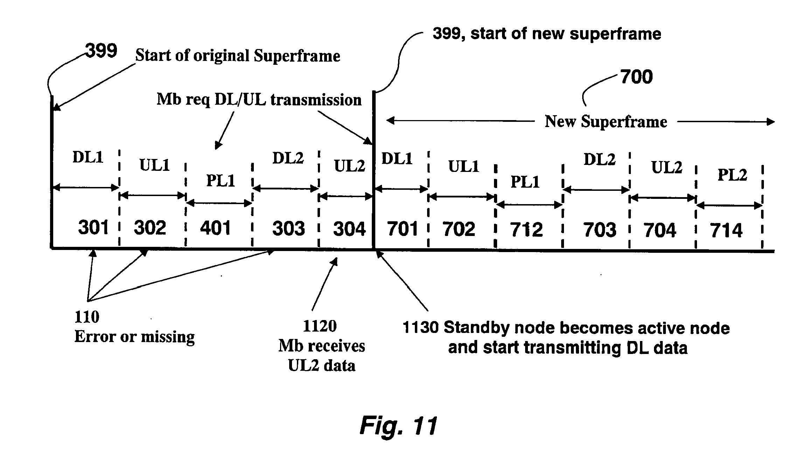

Figure 11 shows the timing of the switch over process triggered by the detection 1110 of active central node failure by the standby node. For example, if the transmitter of the active node fails, the standby node receives no data in DL1 and UL1. The active node transmits a message in the PL1 period to request both the active node and some or all of the leaf nodes to transmit in DL2 and UL2 period, respectively.

In response to receiving the message, the leaf nodes transmit in UL2. If the standby node receives 1120 data from leaf nodes in UL2 period, it confirms that the active central node is not functioning properly. The standby node switches 1130 to active mode, and then transmits a DL1 packet in the time period when PL2 is scheduled to transmit in the original superframe. The start of the PL2 period becomes the start of superframe 399 of the new superframe 700 as defined herein. All leaf nodes start transmitting UL packets in the new time slot.

If the previously active node receives a message from the previously standby node Mb, then it switches to standby or inactive mode.

The central node recovered from inactive mode can rejoin the network as a standby central node by transmitting a joining request in PL1 period. This process is the same as a new central node joins the network as a standby node.

**Effect of the Invention**

As an advantages, a central node operating in hot standby mode provides a redundant central node and therefore removes single point of failure in a star network and can significantly improve the network availability.

A standby central node introduces redundant links between leaf nodes and the network and therefore improves the communication reliability.

A medium access control (MAC) superframe is defined to enable the standby central node in the network, and allows two central nodes to cooperate in communicating with leaf nodes.

Switching procedures enable central nodes to switch among inactive, active and standby mode without interrupting the operation of the network.

## Claims

1. A wireless network with a star topology, comprising:
a first central node (101);
a second central node (201), wherein the first and second nodes (101,201) are functionally equivalent;
a set of leaf nodes (102) configured to communicate with either the first central node (101) or the second central node (201) via wireless links (120,220), depending whether the central nodes (101,201) are in active mode or standby mode.

2. The network of claim 1, wherein the central nodes (101,201) are base stations, and the leaf nodes (102) are mobile stations.

3. The network of claim 1, wherein the first central node (101) is in the active mode and the second central node (201) is in the standby mode, and the first and second central node (101,201) are synchronized via a parallel link to duplicate all necessary information to operate the network, and to immediately switch operation from one central node (101) to the other central node (201).

4. The network of claim 3, wherein the switch occurs in one scan cycle.

5. The network of claim 3, wherein the standby central node (201) monitors transmission by the active central node (101), and the set of leaf nodes (102), and periodically transmits state to the active central node (101) to enable the active central node (101) and the set of leaf nodes (102) to verify states of the wireless links between the standby central node (201) and the set of leaf nodes (102).

6. The network of claim 1, wherein the leaf nodes (102) communicate with the first central node (101) via the second central node (201).

7. The network of claim 3, wherein the nodes communicate with each other using superframes, and the each superframe includes an initial transmission segment, and optional retransmission segments, and wherein the each segment is partitioned into a downlink transmission period for communicating from the active central node (101) to the leaf nodes (102), an uplink transmission period for communicating from the leaf nodes (102) to the active central nodes (101), and a parallel link transmission period for communicating between the nodes.

8. The network of claim 7, wherein the superframe includes a beacon defining the segments and the periods.

9. The network of claim 1, wherein the each central node (101,201) can operate in, and switch between an inactive mode, the standby mode, and the active mode.

10. The network of claim 1, wherein the central nodes (101,201) assist each other on uplink and downlink transmissions and retransmissions.

11. The network of claim 10, further comprising:
combining, at the set of leaf nodes (102), data received from the central nodes (101,201).

12. A method for operating a wireless network with a star topology, comprising:
communicating between a first central node (101) and a set of leaf nodes (102) when the central node (101) is in an active mode;
detecting a failure in the communicating;
activating a second central node (201) functionally equivalent to the first central node (101) in response to the detecting of the failure, and deactivating the first central node (101); and
communicating between the second central node (201) and the set of the leaf nodes (102) after the activating and the deactivating.

13. The method of claim 12, wherein the central nodes (101,201) are base stations, and the leaf nodes (102) are mobile stations.

14. The method of claim 12, wherein the first central node (101) is in an active mode and the second central node (201) is in a standby mode, and further comprising:
synchronizing the first and second central nodes (101,201) via a parallel link to duplicate all necessary information to operate the network, and to immediately switch operation from one central node (101) to the other central node (201).

15. The method of claim 14, wherein the switch occurs in one scan cycle.

16. The method of claim 14, wherein the standby central node (201) monitors transmission by the active central node (101), and the set of leaf nodes (102), and periodically transmits state to the active central node (101) to enable the active central node (101) and the set of leaf nodes (102) to verify states of the wireless links between the standby central node (201) and the set of leaf nodes (102).

17. The method of claim 12, wherein the leaf nodes (102) communicate with the first central node (101) via the second central node (201).

18. The method of claim 14, wherein the nodes communicate with each other using superframes, and the each superframe includes an initial transmission segment, and optional retransmission segments, and wherein the each segment is partitioned into a downlink transmission period for communicating from the active central node (101) to the leaf nodes (102), an uplink transmission period for communicating from the leaf nodes (102) to the active central nodes (101), and a parallel link transmission period for communicating between the nodes.

19. The method of claim 12, wherein the each central node (101,201) can operate in, and switch between an inactive mode, a standby mode, and the active mode.

20. The method of claim 12, wherein the central nodes (101,201) assist each other during uplink and downlink transmissions and retransmissions.
